# EUROPÄISCHE PATENTANMELDUNG

(11) **EP 0 991 233 A2**
(43) Veröffentlichungstag der Anmeldung: **05.04.2000**
(21) Anmeldenummer: 99114724.0
(22) Anmeldetag: 28.07.1999
(51) Int. Cl.: H04L 12/58

(54) **Einrichtung und Verfahren zur entfernten Anzeige des Empfangs elektronischer Post**

(30) Priorität: 29.09.1998 DE 19844599
(71) Anmelder: ROBERT BOSCH GMBH, 70442 Stuttgart (DE)
(72) Erfinder: Artun, Berkan, 64293 Darmstadt (DE); Wagner, Joachim, 35625 Huettenberg (DE)

(57) **Zusammenfassung**

Bei einer Einrichtung und bei einem Verfahren zur entfernten Anzeige des Empfangs elektronischer Post, die von einem Datenendgerät empfangen wird, ist vorgesehen, daß das Datenendgerät mit einem Datenserver verbindbar ist, daß der Datenserver an ein TK-Netz angeschlossen ist, daß das Datenendgerät zur Weiterleitung von empfangener elektronischer Post an den Datenserver ausgebildet ist, daß der Datenserver eine Einrichtung zur Selektion von Informationen aus der vom Datenendgerät empfangenen weitergeleiteten elektronischen Post und zum Senden der Information an das entfernte Endgerät umfaßt und daß das entfernte Endgerät eine Anzeigeeinrichtung aufweist.

## Beschreibung

Die Erfindung betrifft eine Einrichtung und ein Verfahren zur entfernten Anzeige des Empfangs elektronischer Post, die von einem Datenendgerät empfangen wird.

Elektronische Post, meist auch e-mail genannt, die auf einem Datenendgerät mit Anschluß an ein Datennetz empfangen wird, kann auch nur von diesem Endgerät angezeigt werden. Dies bedeutet, daß das Endgerät eingeschaltet sein muß und der Teilnehmer sich in räumlicher Nähe zu diesem Endgerät befinden muß, um den Empfang einer elektronischen Post wahrnehmen zu können.

Aufgabe der vorliegenden Erfindung ist es, eine Empfangsanzeige auch an entfernter Stelle zu ermöglichen. Diese Aufgabe wird bei der erfindungsgemäßen Einrichtung dadurch gelöst, daß das Datenendgerät mit einem Datenserver verbindbar ist, daß der Datenserver an ein Telekommunikationsnetz angeschlossen ist, daß das Datenendgerät zur Weiterleitung von empfangener elektronischer Post an den Datenserver ausgebildet ist, daß der Datenserver eine Einrichtung zur Selektion von Informationen aus der vom Datenendgerät empfangenen weitergeleiteten elektronischen Post und zum Senden der Information an das entfernte Endgerät umfaßt und daß das entfernte Endgerät eine Anzeigeeinrichtung aufweist.

Das erfindungsgemäße Verfahren hat im übrigen den Vorteil, daß keine zusätzliche Funktionalitäten des Endgerätes benötigt werden.

Die Anzeigeeinrichtung des entfernt angeordneten Endgerätes ist vorzugsweise eine optische Anzeige (Display). Grundsätzlich kann jedoch auch eine akustische Anzeige verwendet werden, wobei jedoch die optische Anzeige meist aussagekräftiger gestaltet werden kann. Grundsätzlich ist jedes zum Empfang von digitalen Nachrichten geeignete Telefon als entferntes Endgerät geeignet.

Die Erfindung kann vorzugsweise bei Datenendgeräten angewendet werden, die über ein Datennetz mit dem Datenserver, der auch die elektronische Post an das Datenendgerät versendet, verbunden sind. Sofern bei anderen Verbindungen zwischen dem Datenserver und dem Datenendgerät, beispielsweise über das ISDN, ein Empfang von elektronischer Post ohne einen speziellen Abruf möglich ist, kann die Erfindung auch dort angewendet werden.

Um die Information über empfangene elektronische Post einem jeweils vorwählbaren Endgerät zuzusenden, ist gemäß einer Weiterbildung der erfindungsgemäßen Einrichtung vorgesehen, daß im Datenserver die Adresse eines an das Telekommunikationsnetz angeschlossenen Endgerätes für jeweils ein Datenendgerät speicherbar ist.

Um zu verhindern, daß am entfernten Endgerät zuviele elektronische Postsendungen angezeigt werden, unter denen möglicherweise für den Empfänger uninteressante sind, ist bei einer anderen Weiterbildung vorgesehen, daß das Datenendgerät mit einem Eingangsfilter für die empfangene elektronische Post versehen ist.

Bei dem erfindungsgemäßen Verfahren wird die Aufgabe dadurch gelöst, daß die empfangene elektronische Post an einen Datenserver weitergeleitet wird, daß der Datenserver Information aus der weitergeleiteten Post über ein Telekommunikationsnetz an ein von dem Datenendgerät entferntes Endgerät überträgt und daß die Information an dem entfernten Endgerät angezeigt wird.

Um nicht zuviel, möglicherweise auf der Anzeigevorrichtung des Endgerätes nur unübersichtlich darstellbare Information zu übertragen, ist bei einer Weiterbildung des erfindungsgemäßen Verfahrens vorgesehen, daß die Information den Absender und/oder den Betreff enthält. Damit ist der Benutzer des Endgerätes in der Lage, sich einen Überblick über die empfangene elektronische Post zu verschaffen.

Eine vorteilhafte Ausgestaltung des erfindungsgemäßen Verfahrens besteht darin, daß die Übertragung der Information an das entfernte Endgerät im D-Kanal des ISDN mit dem Generic-Functional(GF)-protokoll erfolgt, das in der Norm ISO/IEC11582;1995(E) beschrieben ist.

Eine Voreinstellung, welches Endgerät zur Anzeige der empfangenen elektronischen Post dienen soll, ist bei einer Weiterbildung des erfindungsgemäßen Verfahrens dadurch möglich, daß die Adresse des entfernten Endgerätes im Telekommunikationsnetz im Datenserver für das jeweilige Datenendgerät abgelegt ist.

Ein besonders günstiges Anwendungsgebietes des erfindungsgemäßen Verfahrens ist gemäß einer anderen vorteilhaften Ausgestaltung dadurch gegeben, daß die Übertragung der Information mindestens teilweise über ein Mobilfunknetz erfolgt.

Um den Empfänger lediglich von für ihn besonders wichtiger elektronischer Post zu benachrichtigen, ist bei einer Weiterbildung des erfindungsgemäßen Verfahrens vorgesehen, daß die beim Datenendgerät eintreffende elektronische Post vor der Weiterleitung an den Datenserver nach vorgebbaren Kriterien, insbesondere Absender und/oder Betreff, gefiltert wird.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer erfindungsgemäßen Einrichtung und
- Fig. 2: ein Datenflußdiagramm zur Erläuterung des erfindungsgemäßen Verfahrens.

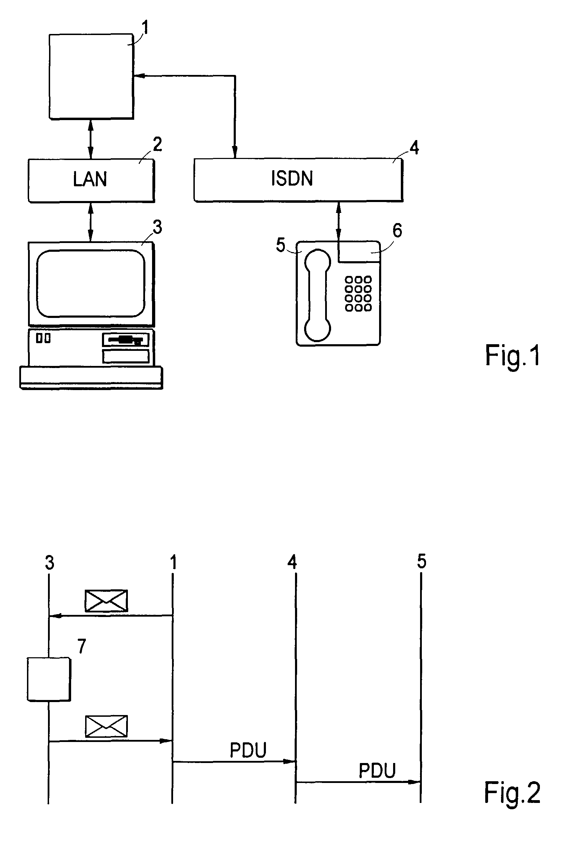

Bei der Einrichtung nach Fig. 1 ist ein Datenserver 1 über ein lokales Netzwerk 2 mit Datenendgeräten verbunden, von denen in Fig. 1 der Übersichtlichkeit halber nur ein Datenendgerät 3 dargestellt ist. Der Datenserver 1 weist ferner eine Verbindung zu einem digitalen Telekommunikationsnetz 4 auf, an das unter vielen ein Telefon 5 mit einem Display 6 angeschlossen ist.

Der Datenserver 1 empfängt, verwaltet und sendet e-mails, beispielsweise im Zusammenhang mit dem Internet oder einem Intranet. Sendet der Datenserver 1 dem Datenendgerät 3 ein e-mail (Fig. 2), wird dieses in einem Eingangsfilter 7 überprüft, ob es vorgegebene Kriterien erfüllt, beispielsweise von einem bestimmten Absender ist oder einen vorgegebenen Betreff aufweist. Im übrigen wird das e-mail in an sich bekannter Weise im Datenendgerät zwischengespeichert und auf Wunsch angezeigt.

Sind die vorgenannten Kriterien erfüllt, sendet das Datenendgerät eine Kopie des e-mails an den Datenserver 1. Dieser entfernt den Inhalt des e-mails und liest aus einem Speicher die Adresse des Endgerätes (Telefons) 5, das die von dem jeweiligen Datenendgerät 3 empfangenen e-mails anzeigen soll. Mit Hilfe dieser Adresse (Rufnummer) überträgt der Datenserver 1 über das digitale Telekommunikationsnetz 4 die Information PDU an das Endgerät 5, wo sie mit Hilfe des Displays 6 (Fig. 1) angezeigt wird.

## Patentansprüche

1. Einrichtung zur entfernten Anzeige des Empfangs elektronischer Post, die von einem Datenendgerät empfangen wird, dadurch gekennzeichnet, daß das Datenendgerät (3) mit einem Datenserver (1) verbindbar ist, daß der Datenserver an ein Telekommunikationsnetz (4) angeschlossen ist, daß das Datenendgerät (3) zur Weiterleitung von empfangener elektronischer Post an den Datenserver (1) ausgebildet ist, daß der Datenserver (1) eine Einrichtung zur Selektion von Informationen aus der vom Datenendgerät (3) empfangenen weitergeleiteten elektronischen Post und zum Senden der Information an das entfernte Endgerät (5) umfaßt und daß das entfernte Endgerät eine Anzeigeeinrichtung (6) aufweist.

2. Einrichtung nach Anspruch 1, dadurch gekennzeichnet, daß im Datenserver (1) die Adresse eines an das Telekommunikationsnetz angeschlossenen Endgerätes (5) für jeweils ein Datenendgerät (3) speicherbar ist.

3. Einrichtung nach einem der Ansprüche 1 oder 2, dadurch gekennzeichnet, daß das Datenendgerät (3) mit einem Eingangsfilter (7) für die empfangene elektronische Post versehen ist.

4. Verfahren zur entfernten Anzeige des Empfangs elektronischer Post, die von einem Datenendgerät empfangen wird, dadurch gekennzeichnet, daß die empfangene elektronische Post an einen Datenserver weitergeleitet wird, daß der Datenserver Information aus der weitergeleiteten Post über ein Telekommunikationsnetz an ein von dem Datenendgerät entferntes Endgerät überträgt und daß die Information an dem entfernten Endgerät angezeigt wird.

5. Verfahren nach Anspruch 4, dadurch gekennzeichnet, daß die Information den Absender und/oder den Betreff enthält.

6. Verfahren nach einem der Ansprüche 4 oder 5, dadurch gekennzeichnet, daß die Übertragung der Information an das entfernte Endgerät im ISDN im D-Kanal mit dem Generic-Functional (GF)-Protokoll erfolgt.

7. Verfahren nach einem der vorhergehenden Ansprüche, dadurch gekennzeichnet, daß die Adresse des entfernten Endgerätes im Telekommunikationsnetz im Datenserver für das jeweilige Datenendgerät abgelegt ist.

8. Verfahren nach einem der Ansprüche 4 bis 7, dadurch gekennzeichnet, daß die Übertragung der Information mindestens teilweise über ein Mobilfunknetz erfolgt.

9. Verfahren nach einem der Ansprüche 4 bis 8, dadurch gekennzeichnet, daß die beim Datenendgerät eintreffende elektronische Post vor der Weiterleitung an den Datenserver nach vorgebbaren Kriterien, insbesondere Absender und/oder Betreff, gefiltert wird.
